# EUROPÄISCHE PATENTSCHRIFT

(11) **EP 3 426 477 B1**
(45) Veröffentlichungstag und Bekanntmachung des Hinweises auf die Patenterteilung: **03.11.2021**
(21) Anmeldenummer: 17700281.3
(22) Anmeldetag: 12.01.2017
(51) Int. Cl.: B29D 30/30, B29D 30/46

(54) **VERFAHREN ZUR HERSTELLUNG EINES FAHRZEUGREIFENS**
METHOD FOR PRODUCING A VEHICLE TIRE
PROCÉDÉ DE FABRICATION D'UN PNEUMATIQUE DE VÉHICULE

(30) Priorität: 11.03.2016 DE 102016204050
(43) Veröffentlichungstag der Anmeldung: 16.01.2019
(73) Patentinhaber: Continental Reifen Deutschland GmbH, 30165 Hannover (DE)
(72) Erfinder: SCHRAMM, Oliver, 31177 Harsum (DE); SU, Dejun, 30159 Hannover (DE)
(74) Vertreter: Continental Corporation
(86) Internationale Anmeldenummer: PCT/EP2017/050510
(87) Internationale Veröffentlichungsnummer: WO 2017/153067

(56) Entgegenhaltungen:
- EP-A1- 0 289 101
- EP-A1- 1 072 395
- WO-A1-2010/020398
- WO-A1-2015/068777
- DE-A1- 1 579 213
- DE-A1- 3 926 721
- DE-A1-102012 016 587
- DE-A1-102014 211 561
- US-A- 5 200 009

## Beschreibung

Die Erfindung betrifft ein Verfahren zur Herstellung eines Fahrzeugreifens.

Es ist bekannt und üblich, Endabschnitte von Materialbahnen überlappend oder stumpf zu spleißen, um ringförmig vorgeformte Stahl- oder Textilkordkarkassen für Reifen herzustellen. Verfahren und Vorrichtungen zum stumpfen Spleißen sind grundsätzlich bekannt. Beim Überlappspleißen überlappen die Endabschnitte direkt auf der Karkasstrommel. Im fertigen Reifen kann der Überlappungsbereich negative Auswirkungen auf Reifeneigenschaften im Normalbetrieb haben, insbesondere eine Unwucht und eine Ungleichförmigkeit der hergestellten Reifen. Ein weiteres Problem sind die im Überlappungsbereich entstehenden Einschnürungen in den Seitenwänden.

Aus der US 5 200 009 A ist ein Verfahren zum Verbinden von elastischen, bahnförmigen Materialien mit verstärkenden Festigkeitsträgern zum Aufbauen einer Karkasse von Reifen bekannt.

Die DE 10 2014 211561 A1 offenbart ein Verfahren zum Herstellen einer Karkasseinlage für einen Reifen, wobei Endabschnitte der Karkasseinlage lokal gedehnt werden.

Aus der DE 39 26 721 A1 ist ein Verfahren und eine Vorrichtung zur Ermittlung der Größe eines Spleißes oder einer Spleißüberlappung beim Aufbau eines Radialreifens bekannt, wobei dazu eine Kamera verwendet wird.

Aus der Anmeldeschrift WO 2010/020398 A1 ist ein Verfahren und eine Vorrichtung zum Bestimmen des Abstandsmaßes an aufgewickelten Materialien bekannt, wobei der Wickelvorgang geregelt wird.

Der Erfindung liegt die Aufgabe zugrunde, ein verbessertes Verfahren zur Herstellung von Fahrzeugreifen bereitzustellen.

Gelöst wird die Aufgabe gemäß Anspruch 1 dadurch, dass ein Verfahren mit folgenden Schritten eingesetzt wird:
a) Bereitstellen einer Karkasseinlage an einer Klemm- und Trenneinrichtung,
b) Beidseitiges Klemmen der Karkasseinlage im Bereich der Trennposition für die Karkasseinlage,
c) Auseinander Dehnen der Endabschnitte der Karkasseinalge im Bereich der Trennposition in Längsrichtung der Karkasseinlage,
   wobei die Festigkeitsträger in den Endabschnitten der Karkasseinlage auseinander gespreizt werden und wobei der Abstand der gespreizten Festigkeitsträger in beiden Endabschnitten wesentlich größer ist als im mittleren Abschnitt der Karkasseinlage,
d) Durchtrennen der Karkasseinlage zwischen den beiden Endabschnitten der Karkasseinlage,
e) Bereitstellen einer Karkasstrommel zur Herstellung einer Reifenkarkasse,
f) Positionieren des vorderen Endabschnittes auf der Karkasstrommel mit einem Servicer,
g) Aufnahme der Positionierung des vorderen Endabschnittes auf der Karkasstrommel mit einer über der Karkasstrommel angeordneten Kamera,
h) Analysierung der Kamerabilder der Kamera, wobei die Breite des vorderen Endabschnittes der Karkasseinlage und die Position auf der Karkasstrommel bestimmt und in einem Datenspeicher gespeichert wird,
i) Berechnung der erforderlichen Rotation der Karkasstrommel, um den hinteren Endabschnitt mit einer vorgegebenen Überlappung über den vorderen Endabschnitt zu legen,
j) Rotieren der Karkasstrommel, wobei die Karkasseinlage auf die Karkasstrommel gewickelt wird,
k) Anhalten der Karkasstrommel und Auflegen des hinteren Endabschnittes über den vorderen Endabschnitt der Karkasseinalge mit einer vorgebenen Üerlappung,
   wobei beide Endabschnitte im Wesentlichen übereinander liegen,
l) Andrücken der Endabschnitte der Karkasseinlage,
   wobei beide Endabschnitte mit den einzelnen gespreizten Festigkeitsträgern ineinander eindringen,
m) Auflegen von weiteren Reifenbauteilen auf die Karkasstrommel,
n) Fertigstellen des Fahrzeugreifens mit weiteren Schritten.

Ein Vorteil der Erfindung ist insbesondere darin zu sehen, dass durch das Verfahren die Herstellung von Fahrzeugreifen verbessert wird.

Die Karkasseinlage für den Fahrzeugreifen wird so hergestellt, dass der Überlappspleiß in der Karkasseinlage ähnliche Materialeigenschaften aufweist wie der übrige Bereich der Reifenkarkasse. Der vordere und hintere Endabschnitt der Karkasseinlage mit den gespreizten Festigkeitsträgern werden direkt übereinander gelegt. Bei einer zu großen oder zu kleinen Überlappung der beiden Endabschnitte würde die Qualität des Materialspleißes wesentlich verschlechtert werden. Mit dem Verfahren können Fahrzeugreifen hergestellt werden, bei denen das visuelle Problem der Seitenwandeinschnürung nicht mehr auftritt.

In einer vorteilhaften Weiterbildung der Erfindung ist vorgesehen, dass zumindestens bei Schritt g) der vordere Endabschnitt der Karkasseinlage mit einem LED-Licht beleuchtet wird, wodurch sich der vordere Endabschnitt der Karkasseinlage mit den gespreizten Festigkeitsträgern im Kamerabild kontrastreich von dem mittleren Bereich der Karkasseinlage unterscheiden läßt.

Mit dem LED-Licht lassen sich der vordere Endabschnitt der Karkassanlage mit den gespreizten Festigkeitsträgern kontrastreich visualisieren.

In einer weiteren vorteilhaften Weiterbildung der Erfindung ist vorgesehen, dass das Auflegen des hinteren Endabschnittes über den vorderen Endabschnitt der Karkasseinlage mit einer automatisierten Greif- und Auflegevorrichtung erfolgt.

Dadurch kann der hintere Endabschnitt der Karkasseinlage unter Umständen noch gedehnt werden, um zu erreichen, dass beide Endabschnitte direkt übereinander liegen.

In einer weiteren vorteilhaften Weiterbildung der Erfindung ist vorgesehen, dass die Kamera zumindestens bei Schritt g) eine dreidimensionale Aufnahme durchführt.

Mit einer dreidimensionalen Aufnahme lässt sich die Trennlinie am vorderen Endabschnitt der Karkasseinlage besser detektieren.

In einer weiteren vorteilhaften Weiterbildung der Erfindung ist vorgesehen, dass bei Schritt c) der vordere und hintere Endabschnitt mit den gespreizten Festigkeitsträgern mit einer im Wesentlichen gleichen Breite hergestellt werden.

Dadurch lässt sich der Überlappspleiß an der Karkasseinalge mit optimalen Materialeigenschaften herstellen.

In einer weiteren vorteilhaften Weiterbildung der Erfindung ist vorgesehen, dass bei Schritt a) bis d) der vordere und hintere Endabschnitt mit den gespreizten Festigkeitsträgern so hergestellt werden, dass jeweils mindestens drei Festigkeitsträger im vorderen und hinteren Endabschnitt angeordnet sind.

Dadurch lässt sich der Überlappspleiß an der Karkasseinlage mit optimalen Festigkeitswerten herstellen.

Anhand eines Ausführungsbeispielea soll die Erfindung näher erläutert werden. Es zeigt:
- Fig. 1 :: ein Ausführungsbeispiel des Verfahrens,
- Fig. 2:: die Karkasstrommel mit der Karkasseinlage in einer dreidimensionalen Ansicht.

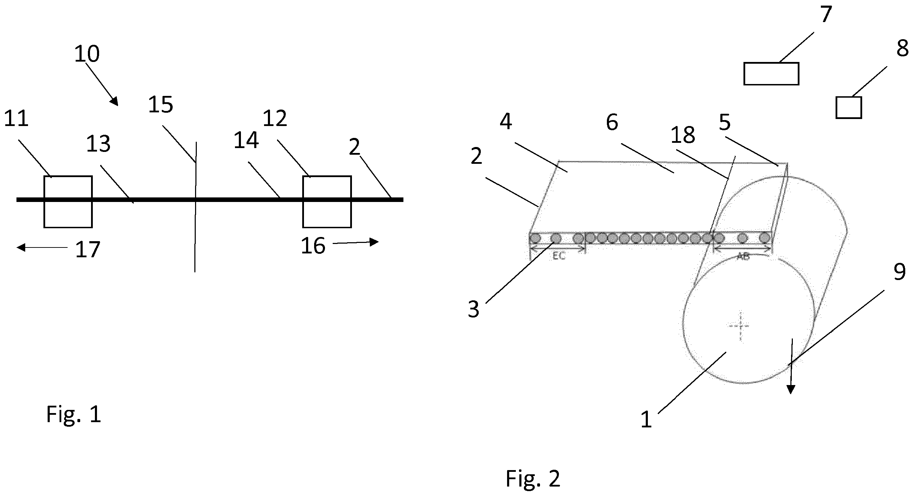

Die Figur 1 zeigt die Klemm- und Trennvorrichtung 10 mit der Karkasseinlage 2. Mit der Klemm- und Trennvorrichtung 10 wird die Karkasseinlage so abgelängt, dass sie anschließend mit einer vorgegebenen Länge auf die Karkasstrommel aufgewickelt werden kann. Die Karkasseinlage 2 ist schematisch in einer Seitenansicht dargestellt und wird mit den beiden Klemmmitteln 11 und 12 eingeklemmt. Anschließend erfolgt eine Materialdehnung der Karkasseinlage 2 in die Dehnrichtung 16 und 17. Nach dem Dehnvorgang besitzen der hintere Endabschnitt 13 und der vordere Endabschnitt 14 der Karkasseinlage auseinandergespreizte Festigkeitsträger, die im Gummimaterial der Karkasseinlage eingebettet sind. Nach der Materialdehnung erfolgt ein Durchtrennen der Karkasseinlage 2 an der Trennposition 15. Der vordere Teil der Karkasseinlage 2 wird anschließend mit einem Servicer vor einer Karkasstrommel positioniert.

Die Fig. 2 zeigt die Karkasstrommel 1 mit der Karkasseinlage 2 in einer dreidimensionalen Ansicht. Die Festigkeitsträger 3 sind im hinteren Endabschnitt 4 und im vorderen Endabschnitt 5 auseinandergespreizt. Die Trennlinie 18 zeigt die Grenze zwischen den gespreizten Materialbereich und dem mittleren Abschnitt 16 der Karkasseinlage mit den normal beabstandeten Festigkeitsträgern. Der vordere Endabschnitt 5 wird mit einem nicht dargestellten Servicer auf die Oberseite der Karkasstrommel 1 aufgelegt. Oberhalb der Karkasstrommel 1 ist eine Kamara 7 installiert, die die Auflegeposition des vorderen Endabschnittes 5 aufnimmmt und anschließend über eine Bildverarbeitung analysiert. Mit der Kamara 7 wird unter anderem die genaue Position des Endabschnittes 5 auf der Oberseite der Karkasstrommel bestimmt. Außerdem wird die Trennlinie 18 des vordem Endabschnites 5 bestimmt. Mit einem LED-Licht 8 wird die Oberseite des Endabschnittes 5 ausgeleuchtet. Dadurch lassen sich die Festigkeitsträger im vorderen Endabschnitt 5 und die Trennlinie 18 im Kamerabild erkennen. Die ermittelten Daten werden in einem Speicher abgelegt und anschließend wird mit einer Software die erforderliche Trommelrotation berechnet, um den hinteren Endabschnitt 4 mit einer hohen Genauigkeit über den vorderen Endabschnitt 5 der Karkasseinlage aufzulegen. Das Auflegen des hinteren Endabschnittes 4 erfolgt mit einer automatisierten Greif- und Auflegevorrichtung, die den Überlappspleiß der Karkasseinlage mit einer hohen Genauigkeit durchführt. Anschließend werden über die Karkasseinlage optional weitere Reifenbauteile aufgewickelt und damit die Reifenkarkasse vervollständigt.

### Bezugszeichenliste (ist Teil der Beschreibung)

- 1: Karkasstrommel
- 2: Karkasseinlage
- 3: Festigkeitsträger
- 4: hinterer Endabschnitt der Karkasseinlage mit gespreizten Festigkeitsträgern
- 5: vordere Endabschnitt der Karkasseinlage mit gespreizten Festigkeitsträgern
- 6: mittlerer Abschnitt der Karkasseinlage mit normal beabstandeten Festigkeitsträgern
- 7: Kamera
- 8: LED-Licht
- 9: Rotationsrichtung der Trommel
- 10: Klemm- und Trennvorrichtung
- 11: Klemmmittel
- 12: Klemmmittel
- 13: hinterer Endabschnitt der Karkasseinlage mit gespreizten Festigkeitsträgern
- 14: hinterer Endabschnitt der Karkasseinlage mit gespreizten Festigkeitsträgern
- 15: Trennposition
- 16: Dehnrichtung nach dem Klemmen der Karkasseinlage
- 17: Dehnrichtung nach dem Klemmen der Karkasseinlage
- 18: Trennlinie zwischen vorderen Endabschnitt und mittleren Endabschnitt

## Patentansprüche

1. Verfahren zur Herstellung eines Fahrzeugreifens mit einer Reifenkarkasse, Reifenwülsten mit Kernen, einem Reifengürtel und einem Laufstreifen mit folgenden Schritten:
a) Bereitstellen einer Karkasseinlage (2) an einer Klemm- und Trenneinrichtung (10),
b) Beidseitiges Klemmen der Karkasseinlage (2) im Bereich der Trennposition (15) für die Karkasseinlage (2),
c) Auseinander Dehnen der Endabschnitte (13, 14) der Karkasseinalge (2) im Bereich der Trennposition (15) in Längsrichtung der Karkasseinlage (2),
wobei die Festigkeitsträger (3) in den Endabschnitten (13, 14) der Karkasseinlage auseinander gespreizt werden und wobei der Abstand der gespreizten Festigkeitsträger (3) in beiden Endabschnitten (13, 14) wesentlich größer ist als im mittleren Abschnitt (6) der Karkasseinlage (2),
d) Durchtrennen der Karkasseinlage (2) zwischen den beiden Endabschnitten (13, 14) der Karkasseinlage (2),
e) Bereitstellen einer Karkasstrommel (1) zur Herstellung einer Reifenkarkasse,
f) Positionieren des vorderen Endabschnittes (5) auf der Karkasstrommel (1) mit einem Servicer,
g) Aufnahme der Positionierung des vorderen Endabschnittes (5) auf der Karkasstrommel (1) mit einer über der Karkasstrommel (1) angeordneten Kamera (7),
h) Analysierung der Kamerabilder der Kamera (7), wobei die Breite des vorderen Endabschnittes (5) der Karkasseinlage (2) und die Position auf der Karkasstrommel (1) bestimmt und in einem Datenspeicher gespeichert wird,
i) Berechnung der erforderlichen Rotation der Karkasstrommel (1), um den hinteren Endabschnitt (4) mit einer vorgegebenen Überlappung über den vorderen Endabschnitt (5) zu legen,
j) Rotieren der Karkasstrommel (1), wobei die Karkasseinlage (2) auf die Karkasstrommel (1) gewickelt wird,
k) Anhalten der Karkasstrommel (1) und Auflegen des hinteren Endabschnittes (4) über den vorderen Endabschnitt (5) der Karkasseinalge (2) mit einer vorgebenen Überlappung,
wobei beide Endabschnitte (4, 5) im Wesentlichen übereinander liegen,
l) Andrücken der Endabschnitte (4, 5)der Karkasseinlage,
wobei beide Endabschnitte (4, 5) mit den einzelnen gespreizten Festigkeitsträgern (3) ineinander eindringen,
m) Auflegen von weiteren Reifenbauteilen auf die Karkasstrommel (1),
n) Fertigstellen des Fahrzeugreifens mit weiteren Schritten.

2. Verfahren nach Anspruch 1,
**dadurch gekennzeichnet, dass**
zumindestens bei Schritt g) der vordere Endabschnitt (5) der Karkasseinlage (2) mit einem LED-Licht (8) beleuchtet wird,
wodurch sich der vordere Endabschnitt (5) der Karkasseinlage (2) mit den gespreizten Festigkeitsträgern (3) im Kamerabild kontrastreich von dem mittleren Bereich (6) der Karkasseinlage (2) unterscheiden läßt.

3. Verfahren nach einem der vorhergehenden Ansprüche,
**dadurch gekennzeichnet, dass**
das Auflegen des hinteren Endabschnittes (5) über den vorderen Endabschnitt (4) der Karkasseinlage (2) mit einer automatisierten Greif- und Auflegevorrichtung erfolgt.

4. Verfahren nach einem der vorhergehenden Ansprüche,
**dadurch gekennzeichnet, dass**
die Kamera (7) zumindestens bei Schritt g) eine dreidimensionale Aufnahme durchführt.

5. Verfahren nach einem der vorhergehenden Ansprüche,
**dadurch gekennzeichnet, dass**
bei Schritt c) der vordere und hintere Endabschnitt (4, 5) mit den gespreizten Festigkeitsträgern (3) mit einer im Wesentlichen gleichen Breite hergestellt werden.

6. Verfahren nach einem der vorhergehenden Ansprüche,
**dadurch gekennzeichnet, dass**
bei Schritt a) bis d) der vordere und hintere Endabschnitt (4, 5) mit den gespreizten Festigkeitsträgern (3) so hergestellt werden,
dass jeweils mindestens drei Festigkeitsträger (3) im vorderen und hinteren Endabschnitt (4, 5) angeordnet sind.

## Claims

1. Method for producing a vehicle tyre having a tyre carcass, tyre beads with cores, a breaker belt and a tread, having the following steps of:
a) providing a carcass insert (2) on a clamping and cutting device (10),
b) clamping the carcass insert (2) on both sides in the region of the cutting position (15) for the carcass insert (2),
c) stretching apart the end portions (13, 14) of the carcass insert (2) in the region of the cutting position (15) in the longitudinal direction of the carcass insert (2),
wherein the reinforcing elements (3) in the end portions (13, 14) of the carcass insert are spread apart and wherein the spacing of the spread reinforcing elements (3) in the two end portions (13, 14) is much greater than in the middle portion (6) of the carcass insert (2),
d) severing the carcass insert (2) between the two end portions (13, 14) of the carcass insert (2),
e) providing a carcass drum (1) for producing a tyre carcass,
f) positioning the front end portion (5) on the carcass drum (1) with a servicer,
g) recording the position of the front end portion (5) on the carcass drum (1) with a camera (7) arranged over the carcass drum (1),
h) analysing the images from the camera (7), wherein the width of the front end portion (5) of the carcass insert (2) and the position on the carcass drum (1) are determined and saved in a data memory,
i) calculating the necessary rotation of the carcass drum (1) in order to lay the rear end portion (4) with a predetermined overlap over the front end portion (5),
j) rotating the carcass drum (1), wherein the carcass insert (2) is wound onto the carcass drum (1),
k) stopping the carcass drum (1) and laying the rear end portion (4) over the front end portion (5) of the carcass insert (2) with a predetermined overlap, wherein the two end portions (4, 5) are located one substantially over the other,
l) pressing on the end portions (4, 5) of the carcass insert,
wherein the two end portions (4, 5) penetrate into one another with the individual spread reinforcing elements (3),
m) laying further tyre components on the carcass drum (1),
n) finishing the vehicle tyre with further steps.

2. Method according to Claim 1,
**characterized in that**
at least in step g), the front end portion (5) of the carcass insert (2) is illuminated with an LED light (8),
with the result that the front end portion (5) of the carcass insert (2) with the spread reinforcing elements (3) can be distinguished from the middle region (6) of the carcass insert (2) in a high-contrast manner in the camera image.

3. Method according to either of the preceding claims,
**characterized in that**
the laying of the rear end portion (5) over the front end portion (4) of the carcass insert (2) is carried out by an automated gripping and laying apparatus.

4. Method according to one of the preceding claims,
**characterized in that**
the camera (7) makes a three-dimensional recording at least in step g).

5. Method according to one of the preceding claims,
**characterized in that**
in step c), the front and rear end portions (4, 5) with the spread reinforcing elements (3) are produced with a substantially identical width.

6. Method according to one of the preceding claims,
**characterized in that**
in steps a) to d), the front and rear end portions (4, 5) with the spread reinforcing elements (3) are produced such
that in each case three reinforcing elements (3) are arranged in the front and rear end portions (4, 5).

## Revendications

1. Procédé de fabrication d'un pneumatique de véhicule comprenant une carcasse de pneumatique, des talons de pneumatique avec noyaux, une ceinture de pneumatique et une bande de roulement, ledit procédé comprenant les étapes suivantes :
a) fournir un insert de carcasse (2) sur un dispositif de serrage et de séparation (10),
b) serrer l'insert de carcasse (2) des deux côtés dans la zone de la position de séparation (15) de l'insert de carcasse (2),
c) écarter les portions d'extrémité (13, 14) de l'insert de carcasse (2) dans la zone de la position de séparation (15) dans la direction longitudinale de l'insert de carcasse (2),
les renforts (3) dans les portions d'extrémité (13, 14) de l'insert de carcasse étant écartés et la distance entre les renforts écartés (3) étant nettement plus grande dans les deux portions d'extrémité (13, 14) que dans la portion médiane (6) de l'insert de carcasse (2),
d) sectionner l'insert de carcasse (2) entre les deux portions d'extrémité (13, 14) de l'insert de carcasse (2),
e) fournir un tambour de carcasse (1) pour produire une carcasse de pneumatique,
f) positionner la portion d'extrémité avant (5) sur le tambour de carcasse (1) par le biais d'un opérateur,
g) enregistrer le positionnement de la portion d'extrémité avant (5) sur le tambour de carcasse (1) avec une caméra (7) disposée au-dessus du tambour de carcasse (1),
h) analyser les images de la caméra (7), la largeur de la portion d'extrémité avant (5) de l'insert de carcasse (2) et la position sur le tambour de carcasse (1) étant déterminées et mémorisées dans une mémoire de données,
i) calculer la rotation requise du tambour de carcasse (1) afin de placer la portion d'extrémité arrière (4) avec un chevauchement prédéterminé sur la portion d'extrémité avant (5),
j) faire tourner le tambour de carcasse (1), l'insert de carcasse (2) étant enroulé sur le tambour de carcasse (1),
k) arrêter le tambour de carcasse (1) et placer la portion d'extrémité arrière (4) sur la portion d'extrémité avant (5) de l'insert de carcasse (2) avec un chevauchement spécifié,
les deux portions d'extrémité (4, 5) étant sensiblement l'une au-dessus de l'autre,
l) presser les portions d'extrémité (4, 5) de l'insert de carcasse,
les deux portions d'extrémité (4, 5) pourvues des renforts écartés individuels (3) pénétrant l'une dans l'autre,
m) placer d'autres composants de pneumatique sur le tambour de carcasse (1),
n) terminer le pneumatique de véhicule avec d'autres étapes.

2. Procédé selon la revendication 1,
**caractérisé en ce que**
au moins à l'étape g), la portion d'extrémité avant (5) de l'insert de carcasse (2) est éclairée par une lumière LED (8),
la portion d'extrémité avant (5) de l'insert de carcasse (2) pourvue des renforts écartés (3) pouvant être distinguée de la zone médiane (6) de l'insert de carcasse (2) avec un contraste élevé dans l'image de la caméra.

3. Procédé selon l'une des revendications précédentes,
**caractérisé en ce que**
la portion d'extrémité arrière (5) est placée sur la portion d'extrémité avant (4) de l'insert de carcasse (2) à l'aide d'un dispositif automatisé de préhension et de placement.

4. Procédé selon l'une des revendications précédentes,
**caractérisé en ce que**
la caméra (7) effectue un enregistrement tridimensionnel au moins à l'étape g).

5. Procédé selon l'une des revendications précédentes,
**caractérisé en ce que**
à l'étape c) les portions d'extrémité avant et arrière (4, 5) pourvues des renforts écartés (3) sont fabriquées avec sensiblement la même largeur.

6. Procédé selon l'une des revendications précédentes,
**caractérisé en ce que**
aux étapes a) à d) les portions d'extrémité avant et arrière (4, 5) pourvues des renforts écartés (3) sont fabriquées de telle sorte que
au moins trois renforts (3) soient disposés dans chacune des portions d'extrémité avant et arrière (4, 5) .
